# EUROPÄISCHE PATENTSCHRIFT

(11) **EP 1 731 999 B1**
(45) Veröffentlichungstag und Bekanntmachung des Hinweises auf die Patenterteilung: **20.06.2007**
(21) Anmeldenummer: 05012372.8
(22) Anmeldetag: 08.06.2005
(51) Int. Cl.: G06F 9/44

(54) **Mechanismus zum dynamischen Registrieren von Dateien in einer stapelverarbeitungsorientierten Umgebung**
Mechanism for dynamically registering of files in a batch processing environment
Mechanisme d'enregistrement des fichiers dans un environnement de traitement par lots

(43) Veröffentlichungstag der Anmeldung: 13.12.2006
(73) Patentinhaber: UBS AG, 8001 Zürich (CH)
(72) Erfinder: Wietlisbach, Markus, 8125 Zollikerberg (CH); Loacker, Hansbeat, 8132 Egg (CH)
(74) Vertreter: Röthinger, Rainer

(56) Entgegenhaltungen:
- US-A- 5 404 528
- US-A- 6 131 190
- "LOADPLUS for DB2 Reference Manual" BMC SOFTWARE, [Online] Mai 2005 (2005-05), XP002357796 Gefunden im Internet: URL:http://documents.bmc.com/supportu/docu ments/43/25/54325/54325.pdf> [gefunden am 2005-12-07]
- BOURNE S R: "UNIX TIME-SHARING SYSTEM: THE UNIX SHELL" BELL SYSTEM TECHNICAL JOURNAL, AT AND T, SHORT HILLS, NY, US, Bd. 57, Nr. 6, PART 2, 1. Juli 1978 (1978-07-01), Seiten 1971-1990, XP002025448 ISSN: 0005-8580
- YOKOTA M: "INFORMATION SHARING BASED ON SHAPED OBJECT MODEL" NEC RESEARCH AND DEVELOPMENT, NIPPON ELECTRIC LTD. TOKYO, JP, Bd. 37, Nr. 4, Oktober 1996 (1996-10), Seiten 517-527, XP000685765 ISSN: 0547-051X

## Beschreibung

### Gebiet der Erfindung

Die Erfindung betrifft das Gebiet der Stapelverarbeitung. Genauer gesagt betrifft die Erfindung das Registrieren von Dateien, die bei Stapelverarbeitungsabläufen benötigt werden.

### Hintergrund der Erfindung

Die Stapelverarbeitung (Batch Processing) ist eine noch aus der Zeit der Lochkarten stammende Betriebsart für elektronische Rechner. Unter Stapelverarbeitung versteht man allgemein die Bearbeitung einer Folge von Stapelaufträgen. Jeder einzelne Stapelauftrag (Job) ist in der Regel mit allen erforderlichen Programmen, Daten und Anweisungen versehen, um ohne Interaktion eines Benutzers vollständig abgearbeitet zu werden.

Die Stapelaufträgen werden in einer Steuersprache definiert, die allgemein als JCL (Job Control Language) bezeichnet wird. Mittels einer derartigen Steuersprache lassen sich einerseits Ausführungen von Stapelaufträgen in Gänze im Voraus planen, so dass diese ohne jegliche Interaktion im Hintergrund ablaufen können. Andererseits werden systemnahe bzw. physikalische Gegebenheiten (wie Dateinamen, Adressen von Ausgabegeräten, usw.) von dem ablaufenden Programm isoliert und in JCL-Steueranweisungen verlagert. Auf diese Weise werden vor allem solche Vorgänge flexibel planbar, die Stunden oder Tage Rechenzeit erfordern. Derartige rechenintensive Vorgänge sind typisch für periodisch auftretende Stapelverarbeitungsabläufe wie Tagesend- oder Jahresendverarbeitungen bei Banken und anderen Großunternehmen.

Stapelverarbeitungsbasierte Betriebssysteme besitzen häufig spezielle Systemkomponenten für die Steuerung und Ablaufkontrolle von Stapelverarbeitungsabläufen. Diese Systemkomponenten lesen die JCL-Steueranweisungen ein und interpretieren sie. Das Betriebssystem MVS (Multiple Virtual Storage) beispielsweise verwendet JES (Job Entry Subsystem) für das Lesen und Interpretieren der JCL-Steueranweisungen.

Heutzutage bieten viele Betriebssysteme - teilweise durch ergänzende Komponenten - neben der Stapelverarbeitung weitere Betriebsarten an, wie den Dialogbetrieb (Interactive Processing) oder die Echtzeitverarbeitung (Online Processing). So wird das auf der Stapelverarbeitung basierende Betriebssystem MVS mit der Ergänzung CICS (Customer Information Control System) echtzeitfähig. Die Ergänzung TSO (Time Sharing Option) erweitert MVS um den Dialogbetrieb. Eine Überblick über TSO, JCL und JES kann Teuffel, Michael, TSO: Time Sharing Option im Betriebssystem MVS - das Lehr- und Handbuch für den erfolgreichen TSO-Benutzer, 3. Auflage, München, Oldenbourg, 1989 entnommen werden.

Wie bereits angedeutet, enthalten JCL-Steueranweisungen üblicherweise systemnahe bzw. physikalische Informationen und verknüpfen diese mit den programmspezifischen Gegebenheiten. Enthält beispielsweise ein Programm eine vom Programmierer gewählte generische Bezeichnung für einen Dateityp, findet sich in den JCL-Steueranweisung ein Verweis auf die im System gespeicherte Datei (Data Set), die der generischen Dateibezeichnung bei Programmablauf zugeordnet werden soll. Bei MVS/TSO geschieht dieser Verweis über eine JCL-Steueranweisung wie
//meine_eingabedaten DD DSN = ed1.eingabe.daten

Hier steht meine_eingabedaten für die vom Programmierer gewählte generische Bezeichnung eines vom Programm verwendeten Dateityps, und ed1.eingabe.daten steht beispielhaft für den physikalischen Namen einer gespeicherten Datei, die vom Programm verarbeitet werden soll. Anhand eines Datenbank-Katalogs, der dem physikalischen Dateinamen ihren physikalischen Speicherort (Plattenname, Trackadresse, usw.) zuordnet, können bei Abarbeitung der JCL-Steueranweisungen dann die benötigten physikalischen Dateien identifiziert, die erforderlichen temporären Speicherbereiche reserviert und die gewünschten Dateien gelesen werden. Entsprechendes gilt, wenn Dateien geschrieben werden.

Trotz der oben genannten Vorteile der Stapelverarbeitung ist insbesondere bei rechenzeitintensiven und periodisch auftretenden Rechenvorgängen der bislang verfügbare Funktionsumfang unzureichend. So ist es bei vielen stapelverarbeitungsbasierten Betriebssystemen erforderlich, alle von einem Programm benötigten Dateien vor Programmstart zu erzeugen. In der Praxis hat sich herausgestellt, dass häufig zu viele Leerdateien im Voraus erzeugt werden. Nicht benötigte Leerdateien sind allerdings schwer zu identifizieren und werden häufig nach Abschluss eines Stapelverarbeitungsablaufs nicht wieder gelöscht. Aus diesem Grund wird bei herkömmlichen Stapelverarbeitungssystemen viel Speicherplatz unnötigerweise von Leerdateien belegt, die eigentlich gelöscht werden könnten. Ähnliches gilt für Dateien, auf die in der Vergangenheit zwar zugegriffen wurde, die aber bei zukünftigen Programmabläufen nicht mehr benötigt werden.

Ein weiterer Nachteil herkömmlicher Stapelverarbeitungsmechanismen ist, dass in den JCL-Steueranweisungen die physikalischen Dateinamen (etwa der zu schreibenden Dateien) fest vergeben werden müssen. Jedem Dateinamen ist im Datenbank-Katalog wiederum ein fester physikalischer Speicherplatz zuzuweisen. Diese starre Struktur bewirkt bei wiederholt ablaufenden Stapelverarbeitungsabläufen, dass eine vom Programm anzusprechende Datei aufgrund des fest vergebenen physikalischen Dateinamens fortlaufend überschrieben wird. Es war daher lange Zeit keine zufriedenstellende Versionierung von Dateien möglich, d.h. es konnten nicht verschiedene Versionen eines bestimmten Dateityps angelegt werden. (Jedenfalls nicht mit vertretbarem Aufwand. Beispielsweise schied in vielen Fällen eine fortlaufende Vergabe neuer physikalischer Dateinamen in den JCL-Steueranweisungen aus, da diese Steueranweisungen dann vor jedem Stapelverarbeitungsablauf manuell geändert hätten werden müssen.)

Um eine einfachere Versionierung von Dateien zu ermöglichen, wurde vorgeschlagen, die Dateinamen auf Betriebssystemebene mittels Generation Data Groups (GDGs) dynamisch zu vergeben. Gemäß diesem Ansatz steht in den JCL-Steuerdaten nur ein Gruppenname. Erst während eines Stapelverarbeitungsablaufs wird dann vom Betriebssystem eine neue Datei (ein neues Data Set) einer bestimmten Gruppe erzeugt.

Die Verwendung von GDGs ist jedoch für viele Anwendungen ungeeignet, weil einzelne Dateien einer GDG nur relativ bezüglich ihrer Position in einem Datei-Stack angesprochen werden können (also z.B. als "vorletzte Datei" oder "siebte Datei" im Stack). Dies erschwert verständlicherweise die Programmierung und insbesondere die Lesbarkeit von Anweisungen für einen menschlichen Benutzer. Außerdem ist bei Programmabstürzen ein Neustart kritisch, da zwischenzeitlich neue Dateien zum Stack hinzugekommen oder alte Dateien gelöscht worden sein können. In solchen Fällen hat sich dann auch die relative Stackposition einer bestimmten Datei verändert, so dass bei nachfolgenden Verarbeitungen die falsche Datei gelesen, gelöscht, überschrieben, usw. wird.

Der Erfindung liegt die Aufgabe zugrunde, einen verbesserten Mechanismus zur dynamischen Verwaltung von Dateien in einer stapelverarbeitungsorientierten Umgebung anzugeben. Der Mechanismus sollte geeignet sein, die Dateiwirtschaftung (wie beispielweise das Erkennen und Handhaben von nicht mehr benötigten Dateien) zu erleichtern. Darüber hinaus sollte der Mechanismus eine sichere Datei-Versionierung gestatten.

### Kurzer Abriss der Erfindung

Diese Aufgabe wird gelöst durch ein Stapelverarbeitungsverfahren gemäß Anspruch 1, ein Computerprogrammprodukt gemäß Anspruch 19 sowie ein Stapelverarbeitungs-System gemäß Anspruch 21.

Gemäß einem ersten Aspekt der Erfindung wird diese Aufgabe gelöst durch ein Stapelverarbeitungsverfahren, das die folgenden Schritte umfasst: Bereitstellen von Stapelverarbeitungs-Steueranweisungen, die den Aufruf wenigstens eines Programms enthalten; Bereitstellen von Dateien, die jeweils einen physikalischen Dateinamen besitzen, wobei auf die Dateien bei Stapelverarbeitungsabläufen zugegriffen wird; Bereitstellen von programmbezogenen Dateidefinitionsinformationen, welche die Dateien, auf die bei einem Programmablauf (jedenfalls voraussichtlich) zugegriffen wird, vorzugsweise durch abstrakte Selektionskriterien definieren; Bereitstellen eines Dateiregisters zum Registrieren der physikalischen Dateinamen der für Programmabläufe angelegten Dateien in Registereinträgen, wobei die Registereinträge jedem physikalischen Dateinamen wenigstens ein Selektionsattribut zuordnen; und Selektieren und/oder Anlegen von Registereinträgen basierend auf den dem aufzurufenden Programm zugeordneten Dateidefinitionsinformation.

Im Anschluss an das Selektieren von Registereinträgen können die in den selektierten Registereinträgen enthaltenen physikalischen Dateinamen (und ggf. weitere Registerinformationen) vom Dateiregister an eine Komponente übergegeben werden, welche diese Informationen auswertet und weitere Schritte veranlasst. Bei dieser Komponente kann es sich um eine (beispielsweise im Stapelverarbeitungsumfeld angesiedelte) Servicekomponente handeln. Gemäß einer möglichen Ausgestaltung dieses Ansatzes werden die in den selektierten Registereinträgen enthaltenen Informationen (also z.B. die physikalischen Dateinamen) vom Dateiregister an die Servicekomponente übergeben, die basierend auf diesen Informationen eine Laufzeitumgebung für das aufzurufende Programm vorbereitet. Das Vorbereiten der Laufzeitumgebung kann das Reservieren von Speicherplatz oder das Vorbereiten (z.B.

Öffnen) von Pfaden für die vom Programm benötigten Dateien umfassen. Unter Programmen werden hier allgemein System- oder Anwendungsprogramme, aber auch beispielsweise Prozeduren von Stapelverarbeitungs-Steueranweisungen (also etwa systemseitig definierte JCL-Prozeduren wie ein Sortieralgorithmus oder ein Compileraufruf) verstanden.

Dem Selektieren und/oder Anlegen von Registereinträgen kann eine Konkretisierung der in den Dateidefinitionsinformationen enthaltenen abstrakten Selektionskriterien vorangehen. Das Konkretisieren der abstrakten Selektionskriterien kann anhand wenigstens eines Parameters erfolgen, der bei Start eines Stapelverarbeitungsablaufs (beispielsweise an eine Stapelverarbeitungs-Steuerkomponente wie JES) übergeben wird. Das Starten eines Stapelverarbeitungsablaufes und das Übergeben des wenigstens einen konkretisierenden Parameters kann mittels einer Ablaufsteuerkomponente (Scheduler) erfolgen. Die Ablaufsteuerkomponente befindet sich zweckmäßigerweise in Kommunikation mit der Servicekomponente. Der Servicekomponente oder einer Komponente des Dateiregisters (oder der Stapelverarbeitungs-Steuerkomponente) ist es dann möglich, basierend auf dem wenigstens einen übergebenen Parameter das wenigstens eine abstrakte Selektionskriterium zu konkretisieren. Basierend auf dem wenigstens einen konkretisierten Selektionskriterium werden Registereinträge im Dateiregister selektiert und/oder angelegt. Das Anlegen von Registereinträgen kann getrennt von dem Selektiervorgang erfolgen. So ist es denkbar, die neuen Registereinträge erst nach Programmablauf anzulegen (während die entsprechenden Dateien bzw. Pfade zu diesen Dateien bereits vor Programmablauf angelegt werden). Darüber hinaus können nach Programmablauf die selektierten Registereinträge aktualisiert werden.

Die Dateidefinitionsinformationen sind gemäß einer ersten Variante unmittelbar in den Stapelverarbeitungs-Steueranweisungen angegeben. Gemäß einer zweiten Variante sind die Dateidefinitionsinformationen getrennt von den Steueranweisungen gehalten. Bei der zweiten Variante können die Dateidefinitionsinformationen beispielsweise in einer separaten Datei enthalten sein (für jedes aufzurufende Programm kann eine separate, die Dateidefinitionsinformationen enthaltende Datei angelegt werden). Die einem bestimmten Programm zugewiesene Datei mit Dateidefinitionsinformationen lässt sich in den Stapelverarbeitungs-Steueranweisungen definieren. Eine solche Definition kann die Angabe des physikalischen Dateinamens dieser Datei beinhalten.

Die in den Dateidefinitionsinformationen enthaltenen abstrakten Selektionskriterien können sich auf nicht physikalische Parameter beziehen. Zu solchen nicht physikalischen Parametern zählen beispielsweise nicht physikalische Dateinamen (wie eine von einem Programmierer vergebener und im Programm angesprochener Dateityp).

Zusätzlich oder alternativ hierzu können die abstrakten Selektionskriterien die im Dateiregister zu selektierenden und/oder neu anzulegenden Dateien auch auf andere Art und Weise abstrakt (also nicht unmittelbar) definieren. Beispielsweise können allgemein gehaltene Dateiversions- und/oder Dateistatuskriterien als abstrakte Selektionskriterien in den Dateidefinitionsinformationen enthalten sein. Ein allgemein gehaltenes Dateiversionskriterium gibt beispielsweise einen unbestimmten Zeitraum oder Zeitpunkt (z.B. "diese Woche" oder "heute") an, in dem die zu selektierenden Dateien erzeugt oder aktualisiert worden sind.

Zweckmäßigerweise sind die Steueranweisungen nicht nur frei von Dateidefinitionsinformationen, sondern im Fall eines aufzurufenden Anwendungsprogramms auch frei von Zuweisungen physikalischer Dateinamen für die bei Ablauf des Anwendungsprogramms benötigten Dateien. Beide Maßnahmen sowie das Vorsehen des Dateiregisters sind hilfreich im Zusammenhang mit der Implementierung eines Mechanismus zur Dateiversionierung.

In den Registereinträgen des Dateiregisters ist jedem physikalischen Dateinamen wenigstens ein Selektionsattribut zugeordnet. Basierend auf den Selektionsattributen in den Registereinträgen sowie den ermittelten Selektionskriterien erfolgt das Bestimmen der zu selektierenden und/oder anzulegenden Registereinträge. Gemäß einer ersten Variante umfasst das wenigstens eine Selektionsattribut ein Dateiversionsattribut. Das Dateiversionsattribut kann so gewählt werden, dass es eine Unterscheidung unterschiedlicher Versionen eines im Programmcode definierten Dateityps ermöglicht. So ist das Dateiversionsattribut beispielsweise ein Zeitstempel oder eine fortlaufende Nummerierung.

Gemäß einer weiteren Variante gibt das wenigstens eine Selektionsattribut eine programmspezifische Dateitypbezeichnung an. Ein solches Selektionsattribut ermöglicht die programmbezogene Selektion und/oder das programmbezogene Anlegen von Registereinträgen (mit darin enthaltenen physikalischen Dateinamen).

Gemäß einer dritten Variante umfasst das wenigstens eine Selektionsattribut ein Dateistatusattribut. Mittels des Dateistatusattributs kann der Aktivitätsstatus einer Datei gekennzeichnet sein. Das Dateistatusattribut kann ein binärer Parameter (aktiv/inaktiv) oder ein mehr als zwei Zustände aufweisender Parameter sein. Unter Verwendung des Dateistatusattributs lassen sich vorteilhafte Funktionen wie das Auffinden nicht mehr benötigter Leerdateien oder eine statusabhängige Dateiselektion im Rahmen der Stapelverarbeitungsabläufe implementieren.

Die Selektionsattribute und insbesondere das Dateistatusattribut einer Datei, auf die bei Programmablauf zugegriffen wird, können nach Programmende für den nächsten Stapelverarbeitungsvorgang vergeben oder aktualisiert werden. So kann eine neu angelegte und geschriebene Datei einen ersten Aktivitätsstatus erhalten. Eine bereits früher angelegte und bei Programmablauf gelesene Datei kann hingegen einen vom ersten Aktivitätsstatus verschiedenen, zweiten Aktivitätsstatus erhalten. Auf diese Weise ist es möglich, basierend auf dem Dateistatusattribut (z.B. im Fall des zweiten Aktivitätsstatus) eine Dateibewirtschaftung durchzuführen. Die Dateibewirtschaftung kann das Löschen und/oder Archivieren von Dateien beinhalten. Ferner kann im Rahmen der Dateibewirtschaftung eine Aufbewahrungszeitdauer ("retention period") festgelegt und überwacht werden.

Für eine vor Programmablauf neu angelegte, bei Programmablauf aber nicht verwendete (Leer-) Datei wird zweckmäßigerweise gar nicht erst ein Registereintrag angelegt. In diesem Fall lassen sich durch beispielsweise periodische Vergleiche der im Dateiregister registrierten Dateien mit den tatsächlich existierenden Dateien unnötig erzeugte Dateien sicher erkennen und erforderlichenfalls löschen.

Beim Löschen einer nicht mehr benötigten (z.B. gelesenen oder inaktiven) Datei kann auch der entsprechende Registereintrag im Dateiregister gelöscht werden (und umgekehrt). Gleichermaßen kann mit dem Schreiben einer neuen Datei ein korrespondierender Registereintrag im Dateiregister erzeugt werden. Zweckmäßigerweise werden beim Anlegen eines neuen Registereintrags auch gleich die zugehörigen Selektionsattribute eingetragen und auf diese Weise mit dem physikalischen Dateinamen im Registereintrag verknüpft.

Die Erfindung kann als Software, als Hardware oder als eine Kombination aus Software und Hardware implementiert werden. Daher betrifft ein weiterer Aspekt der Erfindung ein Computerprogrammprodukt mit Programmcodemitteln zum Durchführen der erfindungsgemäßen Schritte, wenn das Computerprogrammprodukt auf einem oder mehreren Computern läuft. Das Computerprogrammprodukt kann auf einem computerlesbaren Datenträger wie einer DVD-ROM oder einer CD-ROM gespeichert sein.

Gemäß einem Hardware-Aspekt stellt die Erfindung ein Stapelverarbeitungs-System bereit. Das erfindungsgemäße Stapelverarbeitungs-System umfasst: eine Stapelverarbeitungs-Steuerkomponente für das Abarbeiten von Stapelverarbeitungs-Steueranweisungen, die den Aufruf wenigstens eines Programms enthalten; eine Speicherkomponente (z.B. eine Datenbank) mit Dateien, die jeweils einen physikalischen Dateinamen besitzen und auf die bei Stapelverarbeitungsabläufen zugegriffen wird; eine Dateidefinitionskomponente zur Bereitstellung von programmbezogenen Dateidefinitionsinformationen, welche die bei einem Programmablauf benötigten Dateien durch abstrakte Selektionskriterien definieren; ein Dateiregister zum Registrieren der physikalischen Dateinamen der für Programmabläufe angelegten Dateien, wobei in Registereinträgen des Dateiregisters jedem physikalischen Dateinamen wenigstens ein Selektionsattribut zugewiesen ist; und eine mit der Stapelverarbeitungs-Steuerkomponente kommunizierende Laufzeit-Komponente, die Zugriff auf das Dateiregister und die Dateidefinitionskomponente hat, wobei die Servicekomponente basierend auf den dem aufzurufenden Programm zugeordneten Dateidefinitionsinformationen ein Selektieren und/oder Anlegen von Registereinträgen veranlasst.

Die in den selektierten und/oder neu angelegten Registereinträgen enthaltenen physikalischen Dateinamen können der Servicekomponente zugänglich sein. Basierend auf den selektierten und/oder neu angelegten Registereinträgen kann von der Servicekomponente somit die Laufzeitumgebung für das aufzurufende Programm vorbereitet werden.

Das Stapelverarbeitungs-System kann außerdem eine Ablaufsteuerkomponente zum Starten der Stapelverarbeitungsabläufe und zur Übergabe wenigstens eines Parameters, der die in den Dateidefinitionsinformationen enthaltenen abstrakten Selektionskriterien konkretisiert, umfassen. Die Servicekomponente kann ausgebildet sein, um basierend auf den konkretisierten Selektionskriterien das Selektieren und/oder Anlegen von Registereinträgen zu veranlassen.

Das Stapelverarbeitungs-System kann ferner einen Datenbank-Katalog enthalten, in dem jedem physikalischen Dateinamen ein physikalischer Speicherort zugewiesen ist. Der Datenbank-Katalog ist zweckmäßigerweise zusätzlich zum Dateiregister vorgesehen.

Weiterhin ist es denkbar, dem Stapelverarbeitungs-System eine Datei-Managementkomponente zuzuordnen. Die Datei-Managementkomponente kann Aufgaben wie das Anlegen von Leerdateien und das Öffnen von Pfaden zu selektierten oder neu angelegten Dateien erfüllen.

### Kurze Beschreibung der Zeichnung

Weitere Vorteile und Ausgestaltungen der Erfindung ergeben sich aus der nachfolgenden Beschreibung bevorzugter Ausführungsbeispiele und aus den Figuren. Es zeigt:
- Fig. 1: eine schematische Darstellung eines Stapelverarbeitungs-Systems gemäß der vorliegenden Erfindung;
- Fig. 2: ein Flussdiagramm einer Ausführungsform des erfindungsgemäßen Stapelverarbeitungsverfahrens;
- Fig. 3: eine schematische Darstellung der Vorbereitung einer Laufzeitumgebung für das Stapelverarbeitungs-System gemäß Fig. 1;
- Fig. 4: eine schematische Darstellung des Selektierens von Registereinträgen im Dateiregister im Zusammenhang mit dem Vorbereiten einer Laufzeitumgebung;
- Fig. 5: eine schematische Darstellung des Registrierens neu angelegter und geschriebener Dateien im Dateiregister;
- Fig. 6: eine schematische Darstellung einer Dateidefinitionskomponente und der darin enthaltenen abstrakten Dateidefinitionsinformationen;
- Fig. 7: eine schematische Darstellung konkretisierter Dateidefinitionsinformationen; und
- Fign. 8 und 9: schematische Darstellungen von Registereinträgen eines Dateiregisters.

### Beschreibung bevorzugter Ausführungsbeispiele

Im Folgenden werden verschiedene Ausführungsbeispiele der Erfindung exemplarisch für eine Stapelverarbeitungsumgebung erläutert, die auf dem Betriebssystem MVS und der hierfür vorgesehenen Dialogkomponente TSO basiert. Es versteht sich von selbst, dass die Erfindung auch bei anderen stapelverarbeitungsorientierten Betriebssystemen wie VMS oder UNIX verwirklicht werden könnte.

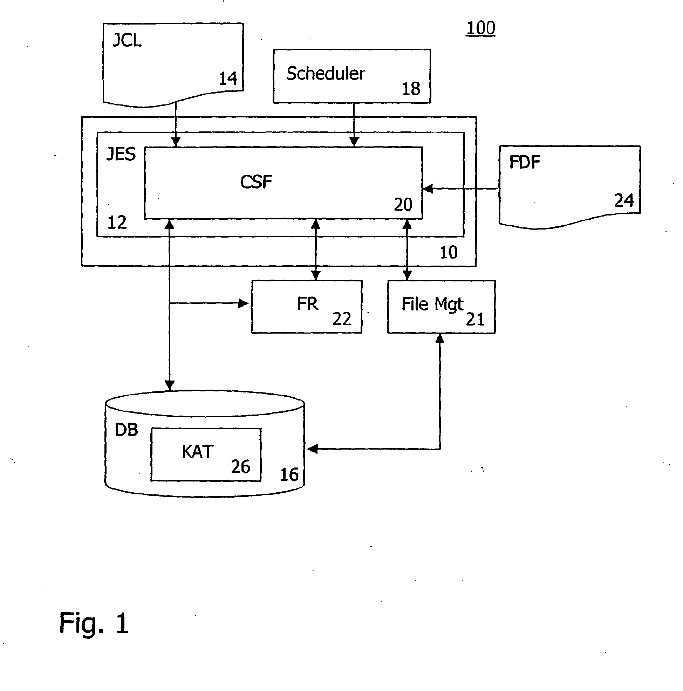

Fig. 1 zeigt eine schematische Darstellung der wesentlichen Komponenten eines beispielhaften Stapelverarbeitungs-Systems 100. Das System 100 umfasst als Kernelement eine von dem Betriebssystem MVS bereitgestellte Stapelverarbeitungs-Umgebung 10. Eine Stapelverarbeitungs-Steuerkomponente 12 (JES) bildet einen wesentlichen Bestandteil der Stapelverarbeitungs-Umgebung 10. Die Steuerkomponente 12 ist zum Abarbeiten von Stapelverarbeitungs-Steueranweisungen 14 (JCL) ausgebildet, die im Ausführungsbeispiel außerhalb der Stapelverarbeitungs-Umgebung 10 bereitgestellt sind.

Üblicherweise werden die Steueranweisungen 14 in Gestalt mehrerer Records (JCL-Records) angelegt und als Datei (Data Set) in einer Systemdatenbank (beispielsweise in der in Fig. 1 dargestellten Datenbank 16) abgespeichert. Wenigstens einer der in den Steueranweisungen 14 enthaltenen JCL-Records (EXEC-Record) definiert ein Programm (z.B. ein Anwendungsprogramm), das bei einem Stapelverarbeitungsablauf aufgerufen und ausgeführt werden soll. Wenigstens ein anderer der in den Steueranweisungen 14 enthaltenen JCL-Records (DD-Record) definiert den physikalischen Dateinamen einer unten näher erläuterten Datei, die in der Stapelverarbeitungs-Umgebung 10 benötigt wird. Die physikalischen Dateinamen der von dem im EXEC-Record angegebenen Programm benötigten Dateien sind in den Steueranweisungen jedoch nicht enthalten.

Außerhalb der Laufzeitumgebung 10 ist eine Ablaufsteuerkomponente 18 (Scheduler) vorgesehen, die mit der Steuerkomponente 12 kommuniziert. Die Ablaufsteuerkomponente 18 legt die zeitliche und logische Reihenfolge von Stapelverarbeitungsabläufen fest und ist ferner dafür verantwortlich, die einzelnen Stapelverarbeitungsabläufe zu starten. Das Starten der Stapelverarbeitungsabläufe kann auch manuell erfolgen, etwa durch Eingabe des TSO-Befehls SUBMIT.

Im Stapelverarbeitungs-Umfeld 10 ist eine hier als Servicekomponente 20 (Common Services Framework, CSF) bezeichnete Komponente vorgesehen, die der dynamischen Bereitstellung von Ressourcen (temporärem Speicherplatz, Dateien mit zugehörigen Pfaden, usw.) für einen Stapelverarbeitungsablauf dient. Eine wesentliche Funktion der Servicekomponente 20 ist das Vorbereiten einer Laufzeitumgebung für das in den Steueranweisungen 14 angegebene, bei einem Stapelverarbeitungsablauf aufzurufende Programm. Die Servicekomponente 20 ist in dem in Fig. 1 dargestellten Ausführungsbeispiel als Teil der Steuerkomponente 12 dargestellt. Die Servicekomponente 10 kann jedoch auch Funktionalitäten außerhalb der Steuerkomponente 12 und insbesondere außerhalb der Stapelverarbeitungs-Umgebung 10 besitzen.

Die Servicekomponente 20 und die Steuerkomponente 12 haben Zugriff auf ein Dateiregister 22 (File Registrator, FR), eine Dateidefinitionskomponente 24 (File Definition File, FDF) sowie die Datenbank 16 (DB). In der Datenbank 16 sind oder werden diejenigen Dateien hinterlegt, auf die bei Stapelverarbeitungsabläufen (und insbesondere bei Programmabläufen) zugegriffen wird. Jeder Datei in der Datenbank 16 ist ein physikalischer Dateiname zugeordnet. In einem Datenbank-Katalog 26 (KAT) ist jedem physikalischen Dateinamen wiederum ein physikalischer Speicherort in der Datenbank 16 zugewiesen. Die Verwaltung des Datenbank-Katalogs 26 geschieht über Systemfunktionen, die hier keiner näheren Betrachtung bedürfen.

Das Dateiregister 22 kommuniziert mit der Servicekomponente 20 und hat Zugriff auf die Datenbank 16 (und erforderlichenfalls auch auf den Datenbank-Katalog 26). Das Dateiregister 22 enthält einzelne Registereinträge. In den Registereinträgen ist jedem physikalischen Dateinamen wenigstens ein Selektionsattribut zugewiesen.

Den einzelnen Selektionsattributen der Registereinträge im Dateiregister 22 sind programmbezogene, abstrakte Selektionskriterien zugeordnet. Die abstrakten Selektionskriterien spezifizieren die bei Ablauf eines bestimmten Programms benötigten (z.B. zu lesenden und/oder zu schreibenden) Dateien (Data Sets) und werden als Dateidefinitionsinformationen von der Dateidefinitionskomponente 24 bereitgestellt. Bei der Dateidefinitionskomponente 24 handelt es sich hier um eine (etwa in der Datenbank 16 hinterlegte) Dateidefinitionsdatei.

Der Dateidefinitionsdatei kann in einem DD-Record der Steueranweisungen 14 ein physikalischer Dateiname zugewiesen sein. Auf diese Weise erfolgt in den Steueranweisungen 14 zwischen einer bestimmten Dateidefinitionsdatei (über deren physikalischen Dateinamen) und einem bestimmten, im EXEC-Record der Steueranweisungen 14 angegebenen Programm (wobei andere Verknüpfungsmechanismen ebenfalls denkbar wären). Basierend auf einer solchen Verknüpfung kann die Servicekomponente 10 die dem aufzurufenden Programm zugeordneten Dateidefinitionsinformationen ermitteln und anhand der Dateidefinitionsinformationen das Selektieren und/oder das Anlegen von Registereinträgen im Dateiregister 22 veranlassen.

Das Selektieren und/oder das Anlegen von Registereinträgen im Dateiregister 22 erfolgt getrennt von einem Zugriff auf und/oder einem Anlegen von korrespondierenden physikalischen Dateien. Für die Veranlassung des Anlegens von Leerdateien im Vorfeld eines Programmablaufs ist eine Datei-Managementkomponente 21 vorgesehen. Mittels der Datei-Managementkomponente 21 lassen sich ferner Pfade zu den selektierten und/oder angelegten Dateien im Vorfeld des Programmablaufs öffnen. Die Datei-Managementkomponente 21 befindet sich gemäß Fig. 1 in Kommunikation mit der Servicekomponente 20 und der Datenbank 16.

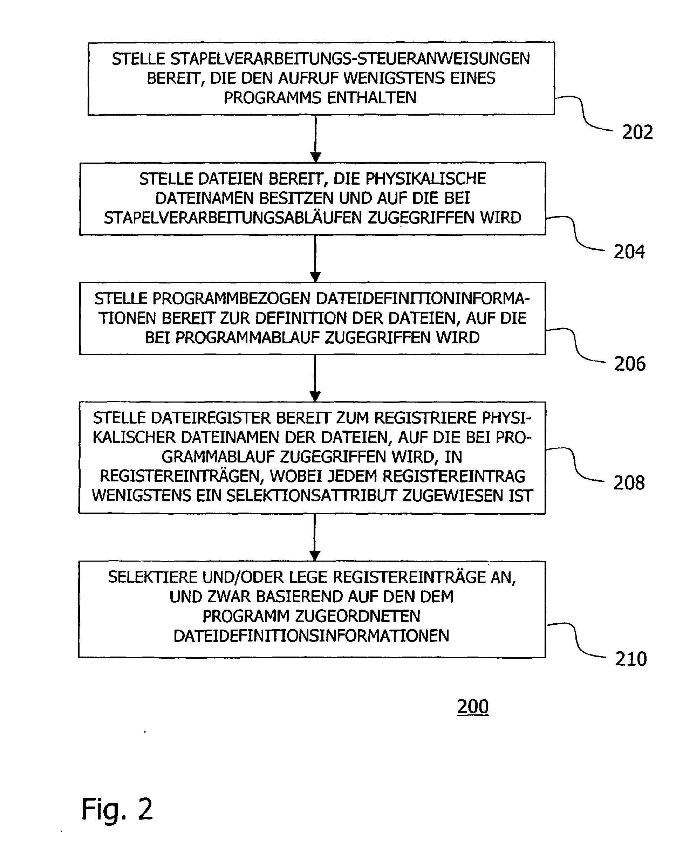

Nachfolgend wird unter Bezugnahme auf das in Fig. 2 dargestellte Flussdiagramm 200 ein Ausführungsbeispiel eines Stapelverarbeitungsverfahrens erläutert. Dieses Verfahren kann unter Steuerung durch ein Computerprogrammprodukt mittels des in Fig. 1 dargestellten Stapelverarbeitungs-Systems 100 oder mittels eines anderweitig konfigurierten System durchgeführt werden.

Das Verfahren beginnt mit einem Schritt 202, in dem Stapelverarbeitungs-Steueranweisungen bereitgestellt werden, die den Aufruf wenigstens eines Programms enthalten. Anschließend werden in einem Schritt 204 Dateien bereitgestellt, die physikalische Dateinamen besitzen und auf die bei Stapelverarbeitungs-Abläufen zugegriffen wird. In einem weiteren Schritt 206 werden programmbezogen Dateidefinitionsinformationen bereitgestellt. Die Dateidefinitionsinformationen definieren diejenigen Dateien, auf die bei Programmablauf (jedenfalls voraussichtlich) zugegriffen wird. Der Dateizugriff bei Programmablauf umfasst wenigstens einen Schreibzugriff oder wenigstens einen Lesezugriff. Die Dateidefinitionsinformationen definieren die bei Programmablauf benötigten Dateien vorzugsweise in Form abstrakter Selektionskriterien.

In Schritt 208 wird ein Dateiregister bereitgestellt, in dem die physikalischen Dateinamen der für Programmabläufe angelegten Dateien in Form von Registereinträgen registrierbar sind. Zweckmäßigerweise werden Registereinträge ausschließlich für solche Dateien angelegt, auf die bei einem vorherigen Programmablauf tatsächlich zugegriffen wurde. Im Dateiregister ist jedem Registereintrag wenigstens ein Selektionsattribut zugewiesen.

In einem weiteren Schritt 210 werden Registereinträge selektiert und/oder angelegt. Das Selektieren und/oder Anlegen der Registereinträge erfolgt basierend auf den dem aufzurufenden Programm zugeordneten Dateidefinitionsinformationen. Jeder Selektiervorgang basiert auf den darin enthaltenen Selektionskriterien. Das Anlegen eines neues Registereintrags kann derart erfolgen, dass im Dateiregister einem physikalischen Dateinamen (in Abhängigkeit von den in den entsprechenden Dateidefinitionsinformationen enthaltenen Selektionskriterien) wenigstens ein Selektionsattribut zugewiesen wird. Die Unterschritte des Selektierens und Anlegens können unmittelbar hintereinander oder bezüglich des Programmablaufs zeitlich getrennt durchgeführt werden. So kann das Selektieren von Registereinträgen im Vorfeld eines Programmablaufs durchgeführt werden, während nach Programmablauf die selektierten Registereinträge aktualisiert und neue Registereinträge angelegt werden.

In weiteren Schritten, die in Fig. 2 nicht dargestellt sind, kann insbesondere im Anschluss an das Selektieren der Registereinträge anhand der in den selektierten Registereinträgen enthaltenen Informationen (z.B. anhand selektierter physikalischer Dateinamen) eine Laufzeitumgebung für das aufzurufende Programm vorbereitet werden. Ferner kann im Vorfeld des Schritts 210 eine Konkretisierung wenigstens eines der in den Dateidefinitionsinformationen enthaltenen abstrakten Selektionskriterien erfolgen. Schritt 210 kann anschließend auf der Grundlage des wenigstens einen konkretisierten Selektionskriteriums durchgeführt werden.

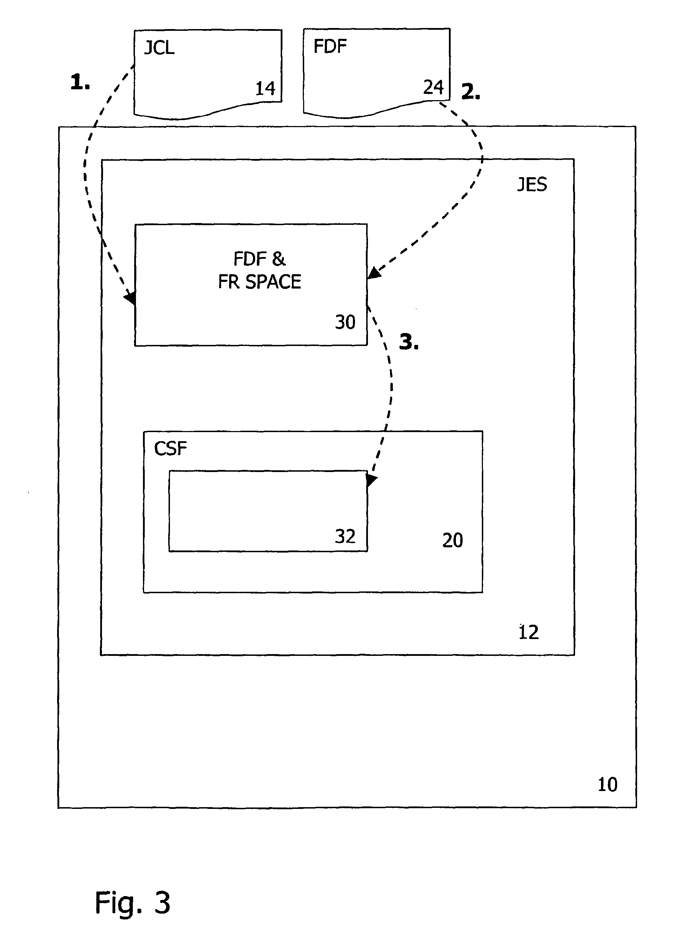

Nachfolgend wird unter Bezugnahme auf die Fign. 3 bis 9 ein detaillierteres Ausführungsbeispiel eines Stapelverarbeitungsverfahrens erläutert. Das erläuterte Verfahren kann mittels des in Fig. 1 dargestellten Stapelverarbeitungs-Systems 100 implementiert werden. Aus diesem Grund werden für gleichartige Elemente übereinstimmende Bezugszeichen verwendet.

Bevor die Funktionalitäten der Servicekomponente 20 in Anspruch genommen werden, wird in der Stapelverarbeitungs-Umgebung 10 eine Laufzeitumgebung für die Servicekomponente 20 angelegt. Das Anlegen der Laufzeitumgebung für die Servicekomponente 20 ist in Fig. 3 schematisch dargestellt und wird im Folgenden kurz erläutert.

Wird die Stapelverarbeitungs-Steuerkomponente 12 von der in Fig. 1 gezeigten Ablaufsteuerkomponente 18 (oder manuell) angewiesen, die Steueranweisungen 14 abzuarbeiten, bereitet die Steuerkomponente 12 in einem in Fig. 3 dargestellten erstem Schritt zunächst eine Laufzeitumgebung für die Servicekomponente 20 vor. Zu diesem Zweck wird in der Stapelverarbeitungs-Umgebung Speicherplatz (nicht dargestellt) reserviert, in den die Servicekomponente 20 geladen werden kann. Des Weiteren wird Speicherplatz 30 für die von der Servicekomponente 20 zu lesende Dateidefinitionskomponente 24 sowie für Dateiregistereinträge reserviert. Das Reservieren des Speicherplatzes 30 für die Dateidefinitionskomponente 24 erfolgt basierend auf Steueranweisungen 14, die der zu ladenden Dateidefinitionskomponente 24 einen physikalischen Dateinamen zuordnen (DD-Record).

Nachdem von der Steuerkomponente 12 Speicherplatz für die Dateidefinitionskomponente 24, Registereinträge sowie die Servicekomponente 20 reserviert wurde, wird unter Kontrolle der Steueranweisungen 14 die Servicekomponente 20 geladen und aufgerufen. Die Servicekomponente 20 lädt dann in einem in Fig. 3 dargestellten zweiten Schritt diejenige Dateidefinitionskomponente (Data Set), deren physikalischer Dateiname in den Steueranweisungen 14 angegeben ist, in den reservierten Speicherplatz 30.

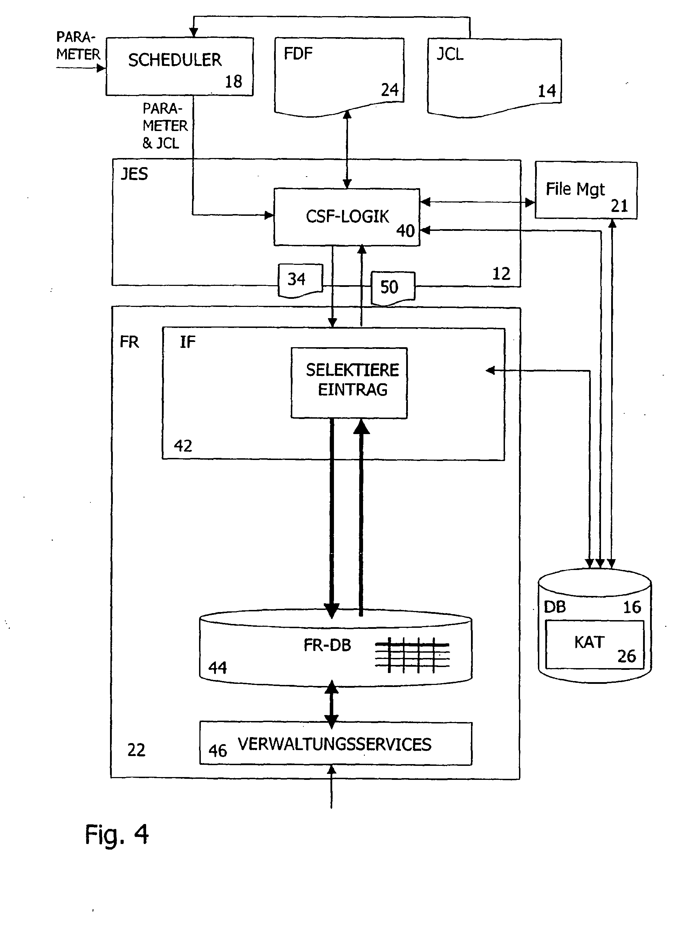

Anschließend wird basierend auf den Inhalten der geladenen Dateidefinitionskomponente 24 und weiteren Informationen, die teilweise von außerhalb der LaufzeitUmgebung 10 (z.B. von der Ablaufsteuerkomponente) erhalten wurden, in einem dritten Schritt eine Laufzeitumgebung 32 für das in den Steueranweisungen 14 angegebene, zu ladende (Anwendungs-)Programm vorbereitet. Das Vorbereiten dieser Laufzeitumgebung ist in Fig. 4 schematisch dargestellt.

Wie Fig. 4 entnommen werden kann, besitzt die Servicekomponente 20 eine Steuerlogik 40. Die Steuerlogik 40 veranlasst die im Folgenden genauer beschriebene Vorbereitung einer Laufzeitumgebung für das aufzurufende Programm.

Zunächst werden von der Ablaufsteuerkomponente 18 die Steueranweisungen 14 sowie ein vorgegebener Parametersatz an die Steuerkomponente 12 übergeben. Von der Steuerkomponente 12 wird die in den Steueranweisungen 14 dem aufzurufenden Programm zugeordnete Dateidefinitionskomponente 24 in den reservierten Speicherplatz (Bezugszeichen 30 in Fig. 3) geladen. Anschließend wird der Inhalt der geladenen Dateidefinitionskomponente 24 anhand des übergebenen Parameters konkretisiert und schließlich analysiert. Ziel dieser Analyse ist es, die von dem aufzurufenden Programm benötigen Dateien zu identifizieren.

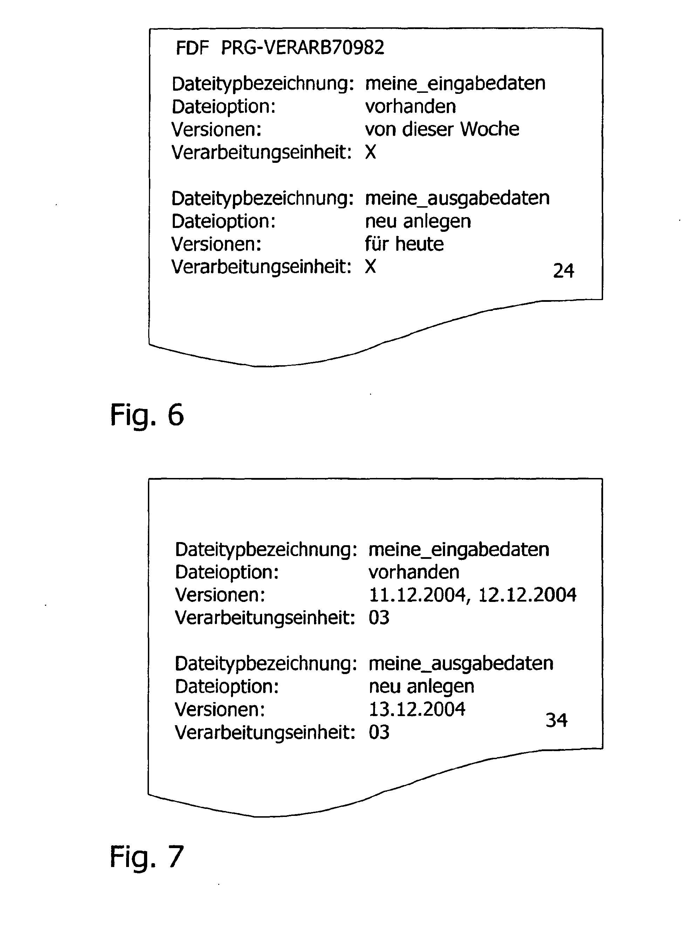

Fig. 6 zeigt beispielhaft eine von der Steuerkomponente 12 geladene Dateidefinitionskomponente 24. Die Dateidefinitionskomponente 24 enthält die Dateidefinitionsinformationen für das in einem EXEC-Record der Steueranweisungen 14 spezifizierte Programm mit der beispielhaften Bezeichnung "PRG-VERARB70982". Die Dateidefinitionsinformationen definieren die bei einem Ablauf dieses Programms benötigten Dateien durch abstrakte (nicht-physikalische) und ggf. weitere Selektionskriterien. Die abstrakten Selektionskriterien sind im Ausführungsbeispiel die Kriterien "Versionen" und "Verarbeitungseinheit". In dem in Fig. 6 dargestellten Fall wird angenommen, dass das Programm auf zwei verschiedene Dateitypen zugreift. Ein erster Dateityp mit der Bezeichnung *meine-eingabedaten* wird von dem Programm gelesen und ein zweiter Dateityp mit der Bezeichnung *meine-ausgabedaten* wird von dem Programm geschrieben. Das abstrakte Selektionskriterium "Versionen" besagt für den Dateityp mit der Bezeichnung *meine-eingabedaten,* dass alle Versionen dieses Dateityps, die in der laufenden Woche angelegt wurden, vom Programm gelesen werden. Außerdem sollen in den betreffenden Stapelverarbeitungsablauf lediglich solche Dateitypen gelesen werden, die einer bestimmten, abstrakt angegebenen (d.h. in den Dateidefinitionsinformationen nicht ausdrücklich spezifizierten) Verarbeitungseinheit zugewiesen sind. Was den zweiten, von dem aufzurufenden Programm benötigten Dateityp *meine_ausgabedaten* anbelangt, wird in den Dateidefinitionsinformationen abstrakt festgelegt, dass für die betreffende Verarbeitungseinheit eine aktuelle Dateiversion (neue Datei) mit dem heutigen Datum angelegt werden soll.

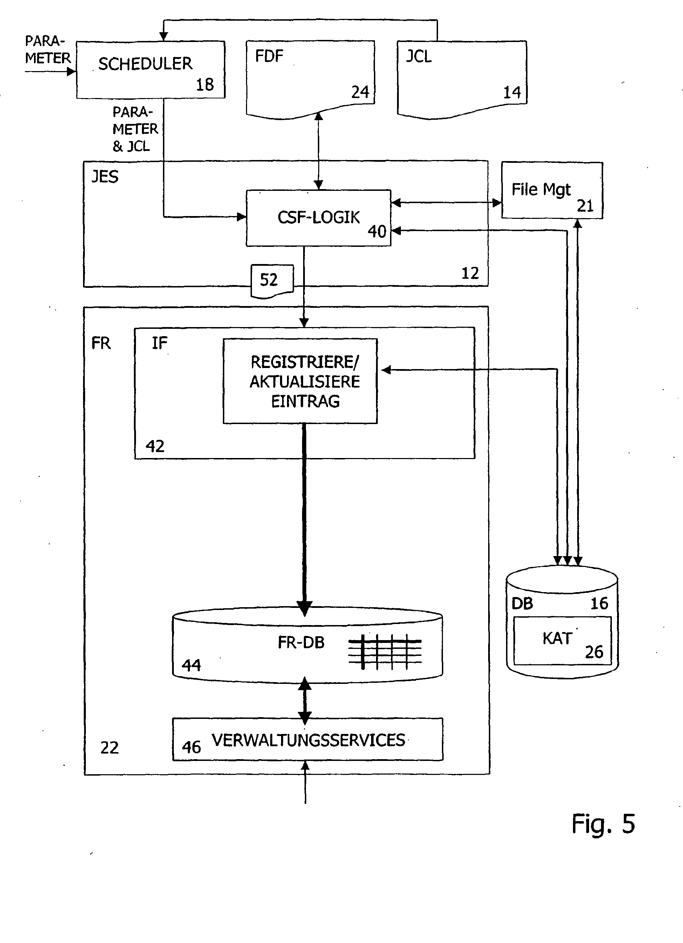

Nach dem Lesen der unter Bezugnahme auf die Fig. 6 erläuterten Dateidefinitionsinformationen werden in einem nächsten Schritt die darin enthaltenen abstrakten Selektionskriterien (Versionen/Verarbeitungseinheit) konkretisiert. Das Konkretisieren dieser Selektionskriterien erfolgt mittels des Parametersatzes, welcher von der Ablaufsteuerkomponente 18 (oder manuell) an die Steuerkomponente übergeben wurde. Die konkretisierenden Parameter können im Beispielfall das aktuelle Datum (z.B. 13.12.2004) sowie die Nummer einer bestimmten Verarbeitungseinheit (z.B. 03) sein. Unter der Annahme, dass in der laufenden Woche für den Dateityp mit der Bezeichnung *meine_eingabedaten* Dateiversionen für den 11. und 12.12.2004 existieren und dass eine neue Datei für den Dateityp mit der Bezeichnung *meine_ausgabedaten* für den 13.12.2004 angelegt werden soll, sehen die konkretisierten Selektionsparameter für die in Fig. 5 dargestellte Dateidefinitionskomponente 24 wie in Fig. 7 gezeigt aus.

Es ist darauf hinzuweisen, dass die Dateitypbezeichnungen gemäß Fig. 6 ebenfalls ein abstraktes (nicht physikalisches) Selektionskriterium darstellen, da den Dateitypbezeichnungen (noch) keine physikalischen Dateinamen zugewiesen sind. Das Zuweisen physikalischer Dateinamen erfolgt vielmehr erst unter zuhilfenahme des Dateiregisters 22, wie unten näher erläutert wird. Es ist weiter darauf hinzuweisen, dass in den Dateidefinitionsinformationen für jeden Dateityp angegebenen ist, ob die entsprechende, vom Programm benötigte Datei bereits in der Datenbank 16 vorhanden ist oder aber vor Programmaufruf durch die Datei-Managementkomponente 21 neu angelegt werden muss.

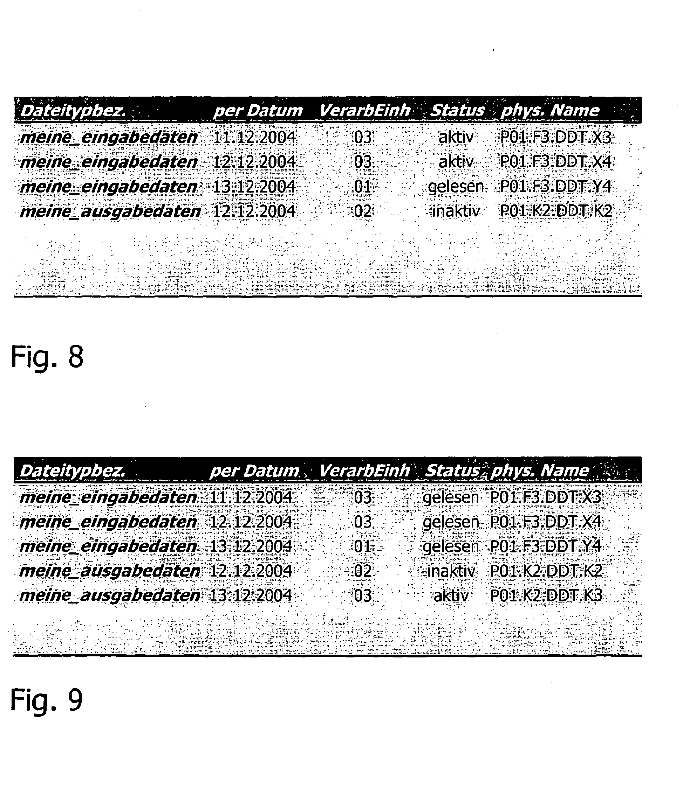

Die in Fig. 7 dargestellten, teilweise konkretisierten Selektionskriterien werden in Form einer einzigen Liste 34 (vgl. Fig. 4) oder sequenziell an das Dateiregister 22 übergeben. Eine Interfacekomponente 42 des Dateiregisters 22 nimmt die Selektionskriterien 34 in Empfang und wertet sie unter Zuhilfenahme einer Dateiregister-Datenbank 44 aus. In dieser Datenbank 44 sind die physikalischen Dateinamen derjenigen Dateien registriert, auf die im Rahmen früherer Stapelverarbeitungsabläufe (d.h. früherer Programmabläufe) zugegriffen wurde. Das Registrieren der physikalischen Dateinamen erfolgt, wie in Fig. 8 dargestellt, in Gestalt einzelner Registereinträge.

In Fig. 8 sind beispielhaft vier Registereinträge dargestellt, wobei jeder Registereintrag einer einzelnen physikalischen Datei mit einem physikalischen Dateinamen entspricht. Jedem Registereintrag sind eine Mehrzahl von Selektionsattributen zugeordnet. Ein erstes Selektionsattribut gibt eine bestimmte Dateitypbezeichnung an. Ein zweites Selektionsattribut ist ein Dateiversionsattribut in Form eines Zeitstempels. Der Zeitstempel gibt den Tag an, an dem eine bestimmte Datei angelegt oder aktualisiert wurde ("per Datum"). Ein drittes Selektionsattribut kennzeichnet die Verarbeitungseinheit, für die eine bestimmte Datei angelegt wurde. Ein viertes Selektionsattribut ist ein Dateistatusattribut. Das Dateistatusattribut gibt den Aktivitätsstatus einer bestimmten Datei an und ermöglicht das Auffinden nicht mehr benötigter Dateien (insbesondere bereits gelesener Dateien).

Die verschiedenen Selektionsattribute werden nun für den ersten Registereintrag der in Fig. 8 dargestellten Tabelle näher erläutert. Gemäß diesem ersten Registereintrag ist die Datei mit dem physikalischen Namen P01.F3.DDT.X3 eine Datei des Dateityps *meine_eingabedaten,* die am 11. Dezember 2004 für die Verarbeitungseinheit 03 erzeugt wurde. Die Datei ist mit dem Statusattribut "aktiv" gekennzeichnet.

Dies vorausgeschickt, kann nun die Funktionsweise der Interfacekomponente 42 gemäß Fig. 4 erläutert werden. Die Interfacekomponente 42 besitzt zwei unterschiedliche Funktionen, nämlich einerseits eine Funktion zum Selektieren eines oder mehrerer bereits existierender Einträge (Fig. 4) und andererseits eine Funktion zum Registrieren eines neuen Eintrags (d.h. Anlegen eines Eintrags wie in Fig. 5 gezeigt). Zunächst soll anhand der Fig. 4 das Selektieren bereits existierender Registereinträge erläutert werden.

Beim Auswerten der konkretisierten Dateidefinitionsinformationen in der Liste 34 gemäß Fig. 7 stellt die Interfacekomponente 42 fest, dass zwei Versionen des Dateityps mit der Bezeichnung *meine_eingabedatei* für die Verarbeitungseinheit 03 gelesen werden sollen, nämlich die beiden Dateiversionen für den 11. und 12.12.2004. Die Interfacekomponente 42 selektiert basierend auf diesen Selektionskriterien die mit diesen Selektionskriterien übereinstimmenden Einträge in der Dateiregister-Datenbank 44. Dies sind die beiden ersten Einträge in der Tabelle gemäß Fig. 8. Die Interfacekomponente 42 liest diese beiden Einträge aus und übergibt sie in Form einer Liste 50 (oder sequenziell) an die Steuerkomponente 12 zurück.

Was den Dateityp mit der Bezeichnung *meine_ausgabedaten* anbelangt, stellt die CSF-Logik 40 fest, dass eine Datei neu angelegt und geschrieben werden soll, und zwar als Dateiversion mit dem heutigen Datum (13.12.2004) und für die Verarbeitungseinheit 03. Die CSF-Logik veranlasst daraufhin, dass von der Datei-Managementkomponente 21 in der Datenbank 16 eine neue Leerdatei angelegt wird und ein neuer physikalischer Dateiname, der auch im Datenbank-Katalog 26 (zusammen mit dem physikalischen Speicherort) eingetragen wird, vergeben wird.

Die Steuerkomponente 12 reserviert daraufhin Speicherbereiche für alle Dateien, die auf der von der Interface-Komponente 42 erhaltenen Liste 50 aufgeführt sind oder von der Datei-Managementkomponente 21 neu angelegt wurden. Es ist darauf hinzuweisen, dass die Steuerkomponente 20 aus der Liste 50 bzw. von der Managementkomponente 21 nun auch die physikalischen Dateinamen der bei Programmablauf angesprochenen Dateien kennt und so Pfade zu den von dem Programm benötigten (also den selektierten und neu angelegten) Dateien öffnen kann. Die Aufgabe des Öffnens von Pfaden zu den von dem Programm benötigten Dateien kann von der Steuerkomponente 20 an die Managementkomponente 21 delegiert werden. Als letzter Schritt der Laufzeitvorbereitung wird von der Servicekomponente 20 noch Speicherplatz für das aufzurufende Programm reserviert und schließlich das in den Steueranweisungen 14 definierte Programm in den hierfür reservierten Speicherbereich geladen und aufgerufen.

Nach Programmende wird von der CSF-Logik 40 anhand der Dateidefinitionsinformationen 24 überprüft, inwieweit Einträge in der Dateiregister-Datenbank 44 neu angelegt oder aktualisiert werden müssen. Die entsprechenden Informationen werden, wie in Fig. 5 dargestellt, in Form einer Liste 52 oder sequenziell an die Interface-Komponente 42 des Dateiregisters 22 übermittelt. Die Interface-Komponente 42 wertet die erhaltenen Informationen aus und legt basierend auf den erhaltenen Informationen neue Registereinträge an oder aktualisiert bestehende Registereinträge.

Dieser Vorgang wird im Folgenden anhand des unter Bezugnahme auf die Fign. 6 bis 8 erläuterten Beispiels veranschaulicht. Nach Programmende überprüft die CSF-Logik 40 anhand der Dateidefinitionsinformationen 24 die bei Programmablauf aufgetretenen Dateizugriffe. Dabei stellt die CSF-Logik fest, dass von Programm zwei Dateien mit der Dateitypbezeichnung *meine_eingabedaten* für die Verarbeitungseinheit 03 gelesen wurden. Dementsprechend enthält die an die Interface-Komponente 42 übergebene Liste 52 die Anweisung, den Status dieser beiden Dateien von "aktiv" auf "gelesen" zu ändern (vgl. Fig. 9). Die CSF-Logik 40 stellt ferner fest, dass eine Datei mit der Dateitypbezeichnung *meine_ausgabedaten* für die Verarbeitungseinheit 03 mit dem "per Datum" 13.12.2004 neu angelegt und vom Programm tatsächlich geschrieben wurde. Dementsprechend enthält die Liste 52 die Anweisung, einen entsprechenden Registereintrag (wie in Fig. 9 dargestellt) mit den entsprechenden Selektionsattributen und dem entsprechenden physikalischen Dateinamen neu anzulegen.

Stellt die CSF-Logik 40 fest, dass von der Datei-Managementkomponente 21 vor Programmablauf zwar eine (Leer-) Datei neu angelegt wurde, die Datei aber bei Programmablauf nicht geschrieben wurde, wird in die Liste 52 keinerlei Hinweis auf die neu angelegte Datei aufgenommen. Dementsprechend wird von der Interface-Komponente 42 auch kein neuer Registereintrag für diese nicht benötigte Leerdatei angelegt. Derartige (nicht benötigte) Leerdateien lassen sich im Rahmen eines Bereinigungsvorgangs auffinden und löschen. Zum Auffinden nicht benötigter Leerdateien wird überprüft, für welche der in der Datenbank 16 angelegten Dateien kein entsprechender Registereintrag in der Dateiregister-Datenbank 44 existiert. Solche Dateien werden dann gelöscht.

Da gemäß den obigen Erläuterungen die physikalischen Dateinamen der vom Programm benötigten Dateien nicht bereits in den Steueranweisungen 14 definiert sein müssen, können die Stapelverarbeitungsabläufe wesentlich flexibler gestaltet werden. Das Zuweisen physikalischer Dateinamen zu programmspezifischen Dateitypen erfolgt bei den Ausführungsbeispielen dynamisch unter zu Hilfenahme des Dateiregisters. Das Dateiregister gestattet auf vorteilhafte Weise eine Dateiversionierung, ohne dass auf herkömmliche GDGs zurückgegriffen werden müsste. Die flexible Vergabe konkreter (absoluter) Versionsattribute im Dateiregister wie dem "per Datum" gestattet darüber hinaus einen problemlosen Neustart bei Systemabstürzen. Insbesondere lassen sich bei Verwendung der Versionsattribute und entsprechender Selektionskriterien die relativen Bezugnahmen der GDGs vermeiden.

Ein weiterer Vorteil des Dateiregisters ist es, dass für jede physikalische Datei ein Dateistatusattribut vergeben werden kann. Das Dateistatusattribut ermöglicht eine Unterscheidung und Verwaltung der einzelnen Dateien. Insbesondere lassen sich damit inaktive oder gelesene Dateien zuverlässig auffinden und beseitigen. Datei- und Statusmanipulationen können, wie in Fig. 4 dargestellt, durch die Interfacekomponente 42 oder durch zusätzliche Verwaltungsservices 46 erfolgen. Die Verwaltungsservices 46 können von außerhalb des Dateiregisters (und von außerhalb der Stapelverarbeitungs-Umgebung) aufgerufen werden. Vorzugsweise erfolgt ein periodischer Aufruf der Verwaltungsservices 46, um in regelmäßigen Abständen inaktive oder gelesene Dateien zu löschen.

Die Verwaltungsservices 46 können auch dazu benutzt werden, anhand der Einträge in der Dateiregister-Datenbank 44 nicht mehr benötigte (gelesene) Dateien zu identifizieren, um deren Löschen in der Datenbank 16 zu veranlassen. Natürlich kann ein solcher Bereinigungsschritt auch auf einem oder mehreren anderen oder weiteren Selektionsattributen basieren. So kann daran gedacht werden, anhand der Registereinträge sämtliche Dateien zu identifizieren, die vor einem bestimmten Stichtag erzeugt wurden und gelöscht werden sollen.

## Patentansprüche

1. Stapelverarbeitungsverfahren, umfassend die Schritte
- Bereitstellen von Job Control Language - Anweisungen (JCL, 14), die den Aufruf wenigstens eines Programms enthalten;
- Bereitstellen von Dateien (16), die jeweils einen physikalische Dateinamen besitzen, wobei auf die Dateien bei Stapelverarbeitungsabläufen zugegriffen wird; und
- Abarbeiten der Anweisungen (JCL, 14) im Rahmen eines Stapelverarbeitungsablaufs;
**gekennzeichnet durch** die Schritte
- Bereitstellen von programmbezogenen Dateidefinitionsinformationen (FDF, 24), welche die Dateien, auf die bei einem Programmablauf zugegriffen wird, definieren;
- Bereitstellen eines Dateiregisters (FR, 22) zum Registrieren der physikalischen Dateinamen der für Programmabläufe angelegten Dateien in Form von Registereinträgen, wobei die Registereinträge jedem physikalischen Dateinamen wenigstens ein Selektionsattribut zuordnen; und
- Selektieren und/oder Anlegen von Registereinträgen basierend auf den dem aufzurufenden Programm zugeordneten Dateidefinitionsinformationen.

2. Verfahren nach Anspruch 1, **dadurch gekennzeichnet,**
**dass** die in den selektierten Registereinträgen enthaltenen physikalischen Dateinamen vom Dateiregister (22) an eine Servicekomponente (CSF, 10) übergeben werden.

3. Verfahren nach Anspruch 1 oder 2, **dadurch gekennzeichnet,**
**dass** basierend auf den selektierten Registereinträgen eine Laufzeitumgebung für das aufzurufende Programm vorbereitet wird.

4. Verfahren nach Anspruch 3, **dadurch gekennzeichnet,**
**dass** das Vorbereiten der Laufzeitumgebung das Vorbereiten von Pfaden für die vom Programm benötigten Dateien umfasst.

5. Verfahren nach einem der Ansprüche 1 bis 4, **dadurch gekennzeichnet,**
**dass** in den Dateidefinitionsinformationen Selektionskriterien enthalten sind, die anhand wenigstens eines Parameters ergänzt werden, und dass basierend auf den ergänzten Selektionskriterien Registereinträge selektiert und/oder angelegt werden.

6. Verfahren nach Anspruch 5, **dadurch gekennzeichnet,**
**dass** der wenigstens eine Parameter bei Start eines Stapelverarbeitungsablaufs an eine Stapelverarbeitungs-Steuerkomponente (JES, 12) übergeben wird.

7. Verfahren nach einem der Ansprüche 1 bis 6, **dadurch gekennzeichnet,**
**dass** nach Programmablauf neue Registereinträge angelegt und/oder selektierte Registereinträge aktualisiert werden.

8. Verfahren nach einem der Ansprüche 1 bis 7, **dadurch gekennzeichnet,**
**dass** die Dateidefinitionsinformationen in einer in den Job Control Language - Anweisungen definierten Datei (FDF, 24) enthalten sind.

9. Verfahren nach einem der Ansprüche 1 bis 8, **dadurch gekennzeichnet,**
**dass** in den Dateidefinitionsinformationen Selektionskriterien enthalten sind, die sich auf wenigstens einen nicht-physikalische Parameter beziehen.

10. Verfahren nach einem der Ansprüche 1 bis 9, **dadurch gekennzeichnet,**
**dass** die Dateidefinitionsinformationen getrennt von den Anweisungen gehalten sind.

11. Verfahren nach einem der Ansprüche 1 bis 10, **dadurch gekennzeichnet,**
**dass** das Programm ein Anwendungsprogramm ist und die Anweisungen frei von Zuweisungen physikalischer Dateinamen für die bei Ablauf des Anwendungsprogramms benötigten Dateien sind.

12. Verfahren nach einem der Ansprüche 1 bis 11, **dadurch gekennzeichnet,**
**dass** das wenigstens eine Selektionsattribut ein Dateiversionsattribut umfasst.

13. Verfahren nach Anspruch 12, **dadurch gekennzeichnet,**
**dass** das Dateiversionsattribut ein Zeitstempel ist.

14. Verfahren nach einem der Ansprüche 1 bis 13, **dadurch gekennzeichnet,**
**dass** das wenigstens eine Selektionsattribut einen programmspezifischen Dateityp angibt.

15. Verfahren nach einem der Ansprüche 1 bis 14, **dadurch gekennzeichnet,**
**dass** das wenigstens eine Selektionsattribut ein Dateistatusattribut umfasst.

16. Verfahren nach Anspruch 15, **dadurch gekennzeichnet,**
**dass** das Dateistatusattribut den Aktivitätsstatus einer Datei kennzeichnet.

17. Verfahren nach Anspruch 15 oder 16, **dadurch gekennzeichnet,**
**dass** das Dateistatusattribut einer Datei, auf die bei Programmablauf zugegriffen wurde, nach Programmablauf vergeben oder aktualisiert wird.

18. Verfahren nach einem der Ansprüche 15 bis 17, **dadurch gekennzeichnet, dass** basierend auf dem Dateistatusattribut eine Bewirtschaftung der Dateien erfolgt.

19. Computerprogrammprodukt mit Programmcodemitteln zum Durchführen der Schritte eines der Ansprüche 1 bis 18, wenn das Computerprogrammprodukt auf einem oder mehreren Computern abläuft.

20. Computerprogrammprodukt nach Anspruch 19, gespeichert auf einem computerlesbaren Datenträger.

21. Stapelverarbeitungs-System (100), umfassend
- eine Stapelverarbeitungs-Steuerkomponente (JES, 12) für das Abarbeiten von Job Control Language-Anweisungen (JCL, 14), die den Aufruf wenigstens eines Programms enthalten; und
- eine Speicherkomponente (DB, 16) mit Dateien, die jeweils einen physikalische Dateinamen besitzen, wobei auf die Dateien bei Stapelverarbeitungsabläufen zugegriffen wird;
**gekennzeichnet, durch**
- eine Dateidefinitionskomponente (FDF, 24) zur Bereitstellung von programmbezogenen Dateidefinitionsinformationen, welche die bei einem Programmablauf benötigten Dateien definieren;
- ein Dateiregister (FR, 22) zum Registrieren der physikalischen Dateinamen der für Programmabläufe angelegten Dateien, wobei in Registereinträgen des Dateiregisters (FR, 22) jedem physikalischen Dateinamen wenigstens ein Selektionsattribut zugewiesen ist; und
- eine mit der Stapelverarbeitungs-Steuerkomponente (JES, 12) kommunizierende Servicekomponente (CSF, 20), die Zugriff auf das Dateiregister (FR, 22) und die Dateidefinitionskomponente (FDF, 24) hat, wobei die Servicekomponente (CSF, 20) basierend auf den dem aufzurufenden Programm zugeordneten Dateidefinitionsinformationen ein Selektieren und/oder Anlegen von Registereinträgen veranlasst.

22. System nach Anspruch 21, **dadurch gekennzeichnet,**
**dass** die in den selektierten und/oder neu angelegten Registereinträgen enthaltenen physikalischen Dateinamen der Servicekomponente (20) zugänglich sind.

23. System nach Anspruch 21 oder 22, **dadurch gekennzeichnet,**
**dass** von der Servicekomponente (20) basierend auf den selektierten und/oder neu angelegten Registereinträgen eine Laufzeitumgebung für das aufzurufende Programm vorbereitet ist.

24. System nach einem der Ansprüche 21 bis 23, **dadurch gekennzeichnet,**
**dass** eine Ablaufsteuerkomponente (18) zum Starten der Stapelverarbeitungsabläufe und zur Übergabe wenigstens eines Parameters, der in den Dateidefinitionsinformationen enthaltene Selektionskriterien ergänzt vorhanden ist, wobei die Servicekomponente (20) basierend auf den ergänzten Selektionskriterien das Selektieren und/oder Anlegen von Registereinträge im Dateiregister (22) veranlasst.

25. System nach einem der Ansprüche 21 bis 24, **dadurch gekennzeichnet,**
**dass** das Dateiregister (FR, 22) in einer Datenbank organisiert ist.

## Claims

1. A method of batch processing, comprising the steps of
- providing job control language instructions (JCL, 14) which include the call of at least one program;
- providing files (16), each of which has a physical file name, said files being accessed during batch processing runs; and
- processing the instructions (JCL, 14) in the context of a batch processing run;
**characterized by** the steps of
- providing program-related file definition information (FDF, 24), which defines the files accessed during a program run;
- providing a file register (FR, 22) to register the physical file names of the files which are created for program runs in the form of register entries, the register entries associating at least one selection attribute with each physical file name; and
- selecting and/or creating register entries on the basis of file definition information which is associated with the program to be called.

2. The method according to claim 1, **characterized in that** the physical file names contained in the selected register entries are passed from the file register (22) to a service component (CSF, 10).

3. The method according to claim 1 or 2, **characterized in that** on the basis of the selected register entries, a run time environment is prepared for the program to be called.

4. The method according to claim 3, **characterized in that** the preparation of the run time environment includes the preparation of paths for the files required by the program.

5. The method according to one of claims 1 to 4, **characterized in that** the file definition information contain selection criteria which are supplemented by means of at least one parameter, and that, on the basis of the supplemented selection criteria, register entries are selected and/or created.

6. The method according to claim 5, **characterized in that** at the start of a batch processing run, the at least one parameter is passed to a batch processing control component (JES, 12).

7. The method according to one of claims 1 to 6, **characterized in that** after the program run, new register entries are created and/or selected register entries are updated.

8. The method according to one of claims 1 to 7, **characterized in that** the file definition information is contained in a file (FDF, 24) defined in the job control language instructions.

9. The method according to one of claims 1 to 8, **characterized in that** the file definition information contains selection criteria which refer to at least one non-physical parameter.

10. The method according to one of claims 1 to 9, **characterized in that** the file definition information is held separately from the instructions.

11. The method according to one of claims 1 to 10, **characterized in that** the program is an application program, and the instructions are free of assignments of physical file names for the files required when the application program runs.

12. The method according to one of claims 1 to 11, **characterized in that** the at least one selection attribute includes a file version attribute.

13. The method according to claim 12, **characterized in that** the file version attribute is a time stamp.

14. The method according to one of claims 1 to 13, **characterized in that** the at least one selection attribute indicates a program-specific file type.

15. The method according to one of claims 1 to 14, **characterized in that** the at least one selection attribute includes a file status attribute.

16. The method according to Claim 15, **characterized in that** the file status attribute identifies the activity status of a file.

17. The method according to claim 15 or 16, **characterized in that** the file status attribute of a file which was accessed during a program run is allocated or updated after the program run.

18. The method according to one of claims 15 to 17, **characterized in that** on the basis of the file status attribute, housekeeping of the files is effected.

19. A computer program product with program code means to carry out the steps of one of claims 1 to 18 when the computer program product is run on one or more computers.

20. The computer program product according to claim 19, stored on a computer-readable data medium.

21. A batch processing system (100), comprising
- a batch processing control component (JES, 12) to process job control language instructions (JCL, 14) which include the call of at least one program; and
- a storage component (DB, 16) with files, each of which has a physical file name and which are accessed during batch processing runs;
**characterized by**
- a file definition component (FDF, 24) to provide program-related file definition information, which defines the files required in a program run;
- a file register (FR, 22) to register the physical file names of the files which are created for program runs, at least one selection attribute being associated with each physical file name in register entries of the file register (FR, 22); and
- a service component (CSF, 20) which communicates with the batch processing control component (JES, 12), and which has access to the file register (FR, 22) and the file definition component (FDF, 24), the service component (CSF, 20) initiating a selection and/or creation of register entries on the basis of file definition information associated with the program to be called.

22. The system according to claim 21, **characterized in that** the physical file names which are contained in the selected and/or newly created register entries are accessible to the service component (20).

23. The system according to claim 21 or 22, **characterized in that** the service component (20) prepares a run time environment for the program to be called, on the basis of the selected and/or newly created register entries.

24. The system according to one of claims 21 to 23, **characterized in that** a run control component (18) is provided to start the batch processing runs and to hand over at least one parameter, which concretises selection criteria contained in the file definition information, the service component (20) initiating the selection and/or creation of register entries in the file register (22) on the basis of the concretised selection criteria.

25. The system according to one of claims 21 to 24, **characterized in that** the file register (FR, 22) is organised in a database.

## Revendications

1. Procédé de traitement de lots, comprenant les étapes de :
- préparation d'instructions Job Control Language (JCL, 14) qui contiennent l'appel d'au moins un programme ;
- préparation de fichiers (16) qui ont chacun un nom physique, un accès aux fichiers s'effectuant lors d'exécutions de traitement de lots ; et
- exécution des instructions (JCL, 14) dans le cadre d'une exécution de traitement de lots ;
**caractérisé par** les étapes de :
- préparation d'informations de définition de fichier (FDF, 24) qui se rapportent aux programmes et qui définissent les fichiers auxquels on accède lors d'une exécution de programme ;
- préparation d'un registre de fichiers (FR, 22) pour enregistrer les noms physiques des fichiers créés pour des exécutions de programme sous la forme d'entrées de registre, les entrées de registre associant à chaque nom de fichier physique au moins un attribut de sélection ; et
- sélection et/ou création d'entrées de registre sur la base des informations de définition de fichier associées au programme à appeler.

2. Procédé selon la revendication 1, **caractérisé par le fait que** les noms de fichiers physiques contenus dans les entrées de registre sélectionnées sont transmis par le registre de fichiers (22) à un composant de service (CSF, 10).

3. Procédé selon la revendication 1 ou 2, **caractérisé par le fait qu'**un environnement d'exécution est préparé pour le programme à appeler sur la base des entrées de registre sélectionnées.

4. Procédé selon la revendication 3, **caractérisé par le fait que** la préparation de l'environnement d'exécution comprend la préparation de chemins pour les fichiers nécessaires au programme.

5. Procédé selon l'une des revendications 1 à 4, **caractérisé par le fait que** les informations de définition de fichier contiennent des critères de sélection qui sont complétés à l'aide d'au moins un paramètre et que des entrées de registre sont sélectionnées et/ou créées sur la base des critères de sélection complétés.

6. Procédé selon la revendication 5, **caractérisé par le fait que**, lors du démarrage d'une exécution de traitement de lots, le ou les paramètres sont transmis à un composant de commande de traitement de lots (JES, 12).

7. Procédé selon l'une des revendications 1 à 6, **caractérisé par le fait que**, après l'exécution de programme, de nouvelles entrées de registre sont créées et/ou des entrées de registre sélectionnées sont actualisées.

8. Procédé selon l'une des revendications 1 à 7, **caractérisé par le fait que** les informations de définition de fichier sont contenues dans un fichier (FDF, 24) défini dans les instructions Job Control Language.

9. Procédé selon l'une des revendications 1 à 8, **caractérisé par le fait que** les informations de définition de fichier contiennent des critères de sélection qui se rapportent à au moins un paramètre non physique.

10. Procédé selon l'une des revendications 1 à 9, **caractérisé par le fait que** les informations de définition de fichier sont gardées séparément des instructions.

11. Procédé selon l'une des revendications 1 à 10, **caractérisé par le fait que** le programme est un programme d'application et que les instructions sont exemptes d'attributions de noms de fichiers physiques pour les fichiers nécessaires à l'exécution du programme d'application.

12. Procédé selon l'une des revendications 1 à 11, **caractérisé par le fait que** le ou les attributs de sélection comprennent un attribut de version de fichier.

13. Procédé selon la revendication 12, **caractérisé par le fait que** l'attribut de version de fichier est un timbre horodateur.

14. Procédé selon l'une des revendications 1 à 13, **caractérisé par le fait que** le ou les attributs de sélection indiquent un type de fichier spécifique au programme.

15. Procédé selon l'une des revendications 1 à 14, **caractérisé par le fait que** le ou les attributs de sélection comprennent un attribut d'état de fichier.

16. Procédé selon la revendication 15, **caractérisé par le fait que** l'attribut d'état de fichier caractérise l'état d'activité d'un fichier.

17. Procédé selon la revendication 15 ou 16,
**caractérisé par le fait que** l'attribut d'état d'un fichier auquel on a accédé lors d'une exécution de programme est prescrit ou actualisé après l'exécution de programme.

18. Procédé selon l'une des revendications 15 à 17, **caractérisé par le fait qu'**une gestion des fichiers s'effectue sur la base de l'attribut d'état de fichier.

19. Programme informatique avec des moyens sous forme de code de programme pour la mise en oeuvre des étapes de l'une des revendications 1 à 18 lorsque le programme informatique est exécuté sur un ou plusieurs ordinateurs.

20. Programme informatique selon la revendication 19, mémorisé sur un support de données pouvant être lu par un ordinateur.

21. Système de traitement de lots (100), comprenant :
- un composant de commande de traitement de lots (JES, 12) pour l'exécution d'instructions Job Control Language (JCL, 14) qui contiennent l'appel d'au moins un programme ; et
- un composant de mémorisation (DB, 16) avec des fichiers qui ont chacun un nom physique, un accès aux fichiers s'effectuant lors d'exécutions de traitement de lots ;
**caractérisé par**
- un composant de définition de fichier (FDF, 24) pour préparer des informations de définition de fichier qui se rapportent aux programmes et qui définissent les fichiers nécessaires lors d'une exécution de programme ;
- un registre de fichiers (FR, 22) pour enregistrer les noms physiques des fichiers créés pour des exécutions de programme, au moins un attribut de sélection étant attribué à chaque nom de fichier physique dans des entrées du registre de fichiers (FR, 22) ; et
- un composant de service (CSF, 20) qui communique avec le composant de commande de traitement de lots (JES, 12) et qui a accès au registre de fichiers (FR, 22) et au composant de définition de fichier (FDF, 24), le composant de service (CSF, 20) provoquant, sur la base des informations de définition de fichier associées au programme à appeler, une sélection et/ou une création d'entrées de registre.

22. Système selon la revendication 21, **caractérisé par le fait que** les noms de fichiers physiques contenus dans les entrées de registre sélectionnées et/ou nouvellement créées sont accessibles au composant de service (20).

23. Système selon la revendication 21 ou 22, **caractérisé par le fait qu'**un environnement d'exécution pour le programme à appeler est préparé par le composant de service (20) sur la base des entrées de registre sélectionnées et/ou nouvellement créées.

24. Système selon l'une des revendications 21 à 23, **caractérisé par le fait qu'**un composant de commande d'exécution (18) est prévu pour le démarrage des exécutions de traitement de lots et pour le transfert d'au moins un paramètre qui complète des critères de sélection contenus dans les informations de définition de fichier, le composant de service (20) provoquant la sélection et/ou la création d'entrées de registre dans le registre de fichiers (22) sur la base des critères de sélection complétés.

25. Système selon l'une des revendications 21 à 24, **caractérisé par le fait que** le registre de fichiers (FR, 22) est organisé dans une base de données.
